# FASCICULE DE BREVET EUROPEEN

(11) **EP 0 579 526 B1**
(45) Date de publication et mention de la délivrance du brevet: **24.01.1996**
(21) Numéro de dépôt: 93401723.7
(22) Date de dépôt: 02.07.1993
(51) Int. Cl.: F16H 3/66

(54) **Transmission automatique à cinq vitesses pour voiture particulière**
Automatisches Fünfganggetriebe für Kraftfahrzeuge
Automatic five speed transmission for automotive vehicles

(30) Priorité: 15.07.1992 FR 9208712
(43) Date de publication de la demande: 19.01.1994
(73) Titulaire: Lepelletier, Pierre André Georges, F-78400 Chatou (FR)
(72) Inventeur: Lepelletier, Pierre André Georges, F-78400 Chatou (FR)
(74) Mandataire: CABINET BONNET-THIRION

(56) Documents cités:
- EP-A- 0 521 270
- DE-A- 4 110 406
- GB-A- 2 107 008
- US-A- 5 129 871
- PATENT ABSTRACTS OF JAPAN vol. 016, no. 030 (M-1203)24 Janvier 1992 & JP-A-32 39 859 & US-A-5 133 229
- AUTOMOTIVE ENGINEERING vol. 86, no. 7, Juillet 1978, WARRENDALE US pages 56 - 59 'overdrive automatic features multi-functional elements'

## Description

La présente invention se situe dans le domaine des transmissions automatiques, notamment pour voitures particulières, constituées de trains planétaires contrôlés par des éléments de friction tels que des embrayages et des freins à commande hydraulique, et généralement associées à un organe de démarrage sujet à glissement tel qu'un convertisseur hydraulique de couple ou un coupleur.

La plupart des transmissions de ce type aujourd'hui sur le marché sont à quatre vitesses et comprennent un convertisseur hydraulique de couple, deux trains planétaires simples ou un train Ravigneaux, cinq éléments de friction, et une roue libre pour faciliter les passages de vitesse première/deuxième et deuxième/première en traction. Très souvent le convertisseur est complété par un embrayage de pontage destiné à éliminer le glissement en dehors des régimes transitoires et à réduire la consommation.

Dans un assez grand nombre de cas, ces transmissions comprennent de plus une deuxième roue libre pour faciliter les passages de vitesse deuxième/troisième et troisième/deuxième, ou troisième/quatrième et quatrième/troisième en traction, et un élément de friction supplémentaire monté en série avec cette roue libre pour la débrayer sur les autres rapports. Outre les trains planétaires, le convertisseur de couple, et éventuellement l'embrayage de pontage, ces transmissions comprennent ainsi aujourd'hui normalement un nombre d'éléments de passage de cinq éléments de friction et une roue libre, ou six éléments de friction et deux roues libres, pour quatre vitesses.

L'objet de la présente invention est une transmission à la fois plus performante et comprenant un nombre d'éléments de passage plus avantageux, de cinq éléments de friction et une roue libre, ou cinq éléments de friction et deux roues libres, pour cinq vitesses, et pouvant se substituer ainsi commodément à ces transmissions connues à quatre vitesses.

De US-A-5 129 871 est comme une transmission automatique, notamment pour voiture particulière, comportant entre un arbre d'entrée et un arbre de sortie alignés dans un carter, un premier, un deuxième et un troisième trains planétaires comprenant chacun un porte-satellites portant des satellites engrenant avec un planétaire et avec une couronne, et cinq organes de friction, à savoir trois embrayages et deux freins dont le serrage sélectif deux à deux détermine divers rapports de transmission entre l'arbre d'entrée et l'arbre de sortie, où
le planétaire du troisième train est solidaire de l'arbre d'entrée, la couronne du deuxième train et le porte-satellites du troisième train sont solidaires de l'arbre de sortie, le porte-satellites du deuxième train est relié à la couronne du troisième train et à l'arbre d'entrée respectivement par les premier et troisième embrayages et immobilisé par le premier frein. La transmission selon l'invention est caractérisée en ce que :
le planétaire du premier train est solidaire du carter, le porte-satellites du premier train et le planétaire du deuxième train sont solidaires entre eux,
la couronne du premier train est reliée à l'arbre d'entrée par le deuxième embrayage et immobilisée par le deuxième frein,
en sorte d'obtenir par serrage sélectif deux à deux des cinq organes de friction cinq vitesses en marche avant : une première, par le premier embrayage et le premier frein ; une deuxième, par le premier embrayage et le deuxième frein ; une troisième, par les premier et deuxième embrayages ; une quatrième, par les deuxième et troisième embrayages ; une cinquième, par le troisième embrayage et le deuxième frein ; et une marche arrière, par le deuxième embrayage et le premier frein.

Afin de faciliter les passages de vitesse première/deuxième et deuxième/première en traction, la transmission peut recevoir de plus une première roue libre montée directement en parallèle avec le premier frein dans un sens tel qu'elle s'oppose à une rotation du porte-satellites du deuxième train en sens inverse de celui de l'arbre d'entrée, en sorte que la première vitesse en traction soit obtenue par le seul serrage du premier embrayage.

Afin de faciliter de même les passages de vitesse quatrième/cinquième et cinquième/quatrième en traction, la transmission peut recevoir en outre une deuxième roue libre montée directement en parallèle avec le deuxième embrayage dans un sens tel qu'elle s'oppose à une rotation de la couronne du premier train plus rapide que celle de l'arbre d'entrée, en sorte que la quatrième vitesse en traction soit obtenue par le seul serrage du troisième embrayage.

Les caractéristiques et avantages de l'invention ressortiront d'ailleurs de la description qui va suivre en référence aux dessins annexés dans lesquels :
la figure 1 représente schématiquement une transmission selon l'invention, avec une première roue libre de passage première/deuxième et deuxième/première en traction ;
la figure 2 représente la grille de sélection des éléments de friction ;
la figure 3 représente le diagramme des vitesses de rotation des deuxième et troisième trains planétaires ;
la figure 4 représente une variante de la transmission de la figure 1, avec une deuxième roue libre de passage quatrième/cinquième et cinquième/quatrième en traction ;
la figure 5 représente une variante de réalisation de la transmission selon la figure 1, avec un train planétaire à satellites étagés.

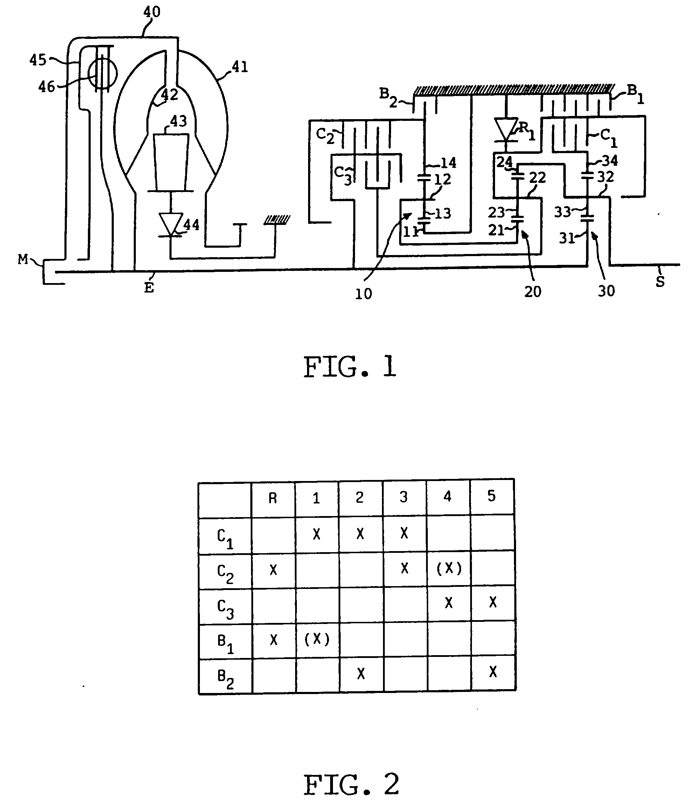

Suivant la représentation de la figure 1, la transmission selon l'invention comporte un arbre d'entrée E et un arbre de sortie S alignés dans un carter. Un premier train planétaire 10 comprend un porte-satellites 12 portant des satellites 13 engrenant avec un planétaire 11 et avec une couronne 14. Un deuxième train planétaire 20 comprend un porte-satellites 22 portant des satellites 23 engrenant avec un planétaire 21 et avec une couronne 24. Un troisième train planétaire 30 comprend un porte-satellites 32 portant des satellites 33 engrenant avec un planétaire 31 et avec une couronne 34. Le planétaire 31 est solidaire de l'arbre d'entrée E, la couronne 24 et le porte-satellites 32 sont solidaires de l'arbre de sortie S, le planétaire 11 est solidaire du carter, et le porte-satellites 12 et le planétaire 21 sont solidaires entre eux.

Un premier embrayage C₁ est interposé entre le porte-satellites 22 et la couronne 34, un deuxième embrayage C₂ est interposé entre l'arbre d'entrée E et la couronne 14, et un troisième embrayage C₃ est interposé entre l'arbre d'entrée E et le porte-satellites 22. Un premier frein B₁ permet d'immobiliser le porte-satellites 22, et un deuxième frein B₂ permet d'immobiliser la couronne 14. Une première roue libre R₁ peut également être ajoutée en parallèle avec le premier frein B₁ pour empêcher le porte-satellites 22 de tourner en sens inverse de l'arbre d'entrée E.

La transmission est complétée par un convertisseur de couple 40 comprenant un impulseur 41 lié au moteur M, une turbine 42 liée à l'arbre d'entrée E, un réacteur 43, une roue libre 44, un embrayage de pontage 45, et un amortisseur de vibrations de torsion 46.

Le fonctionnement est le suivant :

En première, le premier embrayage C₁ et le premier frein B₁ sont serrés. Le porte-satellites 22 et la couronne 34 sont immobilisés et la transmission s'effectue selon le rapport de réduction inférieur du train 30, couronne bloquée. Le planétaire 21 et le porte-satellites 12 sont entraînés en sens inverse par le train 20.

En deuxième, le premier embrayage C₁ et le deuxième frein B₂ sont serrés. Le porte-satellites 12 et le planétaire 21 sont immobilisés. Le porte-satellites 22 et la couronne 34 sont entraînés à vitesse réduite et la transmission s'effectue selon un premier rapport de réduction intermédiaire du train 30.

En troisième, les premier et deuxième embrayages C₁ et C₂ sont serrés. Le porte-satellites 12 et le planétaire 21 sont entraînés en sens direct selon le rapport de réduction G du train 10, planétaire bloqué. Le porte-satellites 22 et la couronne 34 sont entraînés à vitesse plus élevée et la transmission s'effectue selon un deuxième rapport de réduction intermédiaire du train 30.

En quatrième, les deuxième et troisième embrayages C₂ et C₃ sont serrés. Le porte-satellites 12 et le planétaire 21 sont entraînés toujours selon le rapport G et la transmission s'effectue selon un rapport de surmultiplication intermédiaire du train 20.

En cinquième, le troisième embrayage C₃ et le deuxième frein B₂ sont serrés. Le porte-satellites 12 et le planétaire 21 sont immobilisés et la transmission s'effectue selon le rapport de surmultiplication complet du train 20, planétaire bloqué.

En marche arrière, le deuxième embrayage C₂ et le premier frein B₁ sont serrés. Le porte-satellites 12 et le planétaire 21 sont entraînés selon le rapport G et la transmission s'effectue selon ce rapport suivi du rapport d'inversion du train 20, porte-satellites bloqué.

La roue libre R₁ s'oppose à une rotation du porte-satellites 22 en sens inverse de celui de l'arbre d'entrée E et produit, en première vitesse, le même effet qu'un serrage du premier frein B₁, moins le frein moteur. En même temps, elle reste dégagée sur les autres rapports. Ainsi la première vitesse en traction est obtenue par le seul serrage du premier embrayage C₁, et les passages à la montée première/deuxième et à la descente deuxième/première en traction sont opérés par la seule manoeuvre de serrage et de desserrage du deuxième frein B₂ et s'en trouvent facilités.

La figure 2 représente la grille de sélection des éléments de friction. On appréciera que le passage de chaque vitesse à la suivante s'effectue sur toute l'étendue des rapports en changeant un seul des deux éléments de friction mis en oeuvre, soit exclusivement par des transitions simples, offrant les plus larges possibilités de commande.

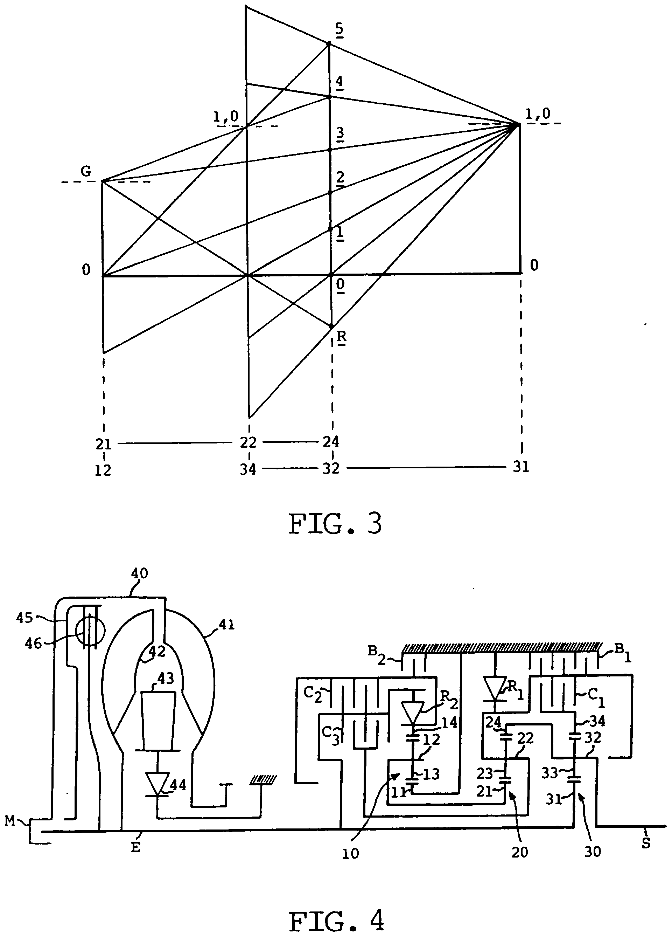

Dans cette grille sont mises entre parenthèses les commandes rendues facultatives par la présence de roues libres R₁ et R₂ respectivement pour la première et la quatrième vitesse, soit la commande de B₁ pour la première et de C₂ pour la quatrième comme expliqué plus loin figure 4.

La figure 3 représente le diagramme des vitesses de rotation des trains 20 et 30 par rapport à la vitesse de l'arbre d'entrée E prise pour unité. On appréciera que toutes les vitesses en retour restent dans des limites très raisonnables.

Enfin, on remarquera la possibilité d'un point mort freiné - c'est-à-dire une condition dans laquelle l'arbre d'entrée E est libre et l'arbre de sortie S est immobilisé - obtenu par serrage des premier et deuxième freins B₁ et B₂, et d'une prise directe - intermédiaire entre la troisième et la quatrième - obtenue par serrage des premier et troisième embrayages C₁ et C₃.

Le tableau 1 ci-après donne trois exemples d'étagements possibles en fonction des nombres de dents des trois trains planétaires 10, 20 et 30. Les rapports sont donnés en vitesse de l'arbre de sortie S rapportée à la vitesse de l'arbre d'entrée E prise pour unité, indépendamment du glissement du convertisseur 40. Les raisons représentent le rapport de deux vitesses consécutives. Les ouvertures représentent le rapport des vitesses extrêmes : rapport de la cinquième à la première pour l'ouverture avant ; rapport de la cinquième à la marche arrière pour l'ouverture arrière. La prise directe, intermédiaire entre la troisième et la quatrième, n'est pas utilisée.

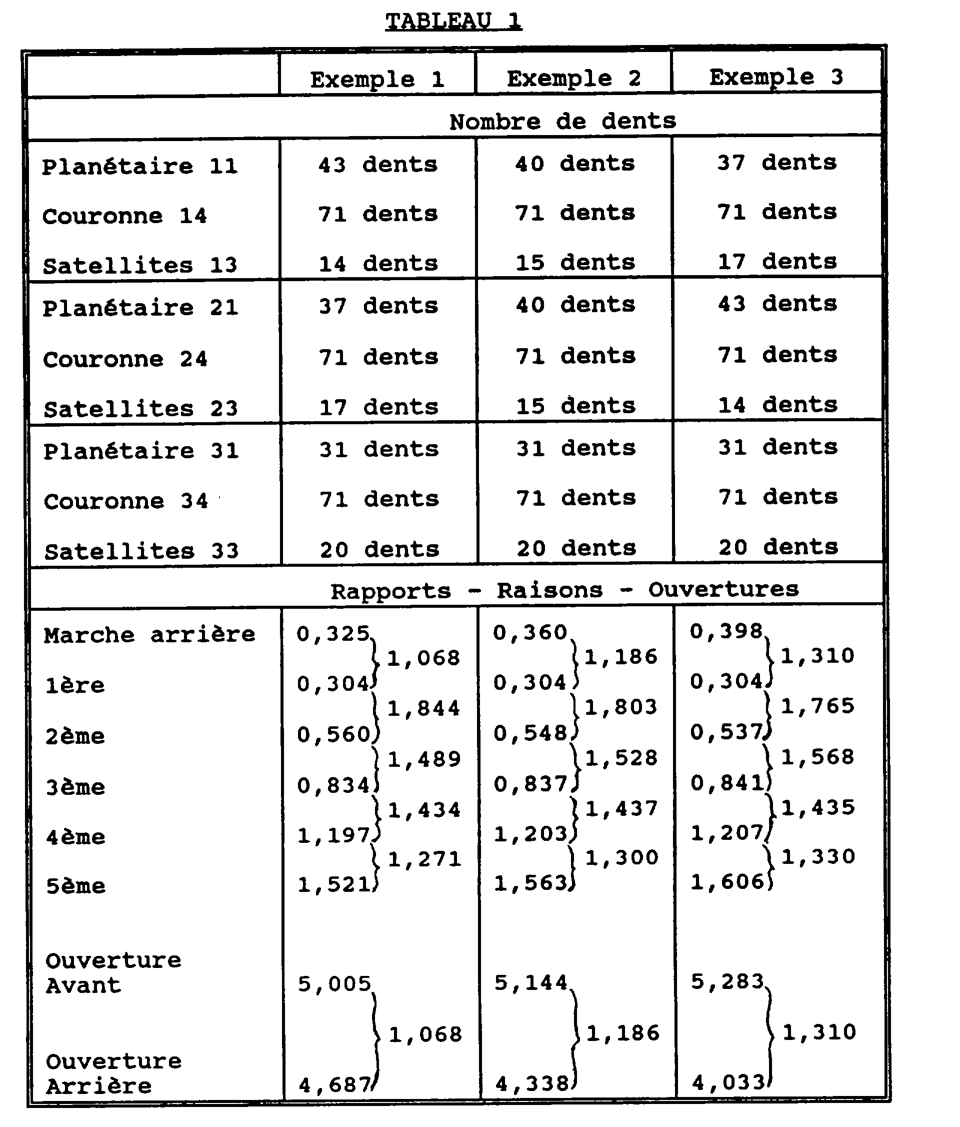

Ces étagements conviennent parfaitement à des transmissions à cinq vitesses, et témoignent d'une flexibilité remarquable. On comprendra aisément que des modifications de pignonnerie, ou même de simples permutations des trains planétaires, accroîtraient encore cette flexibilité.

On se reportera maintenant à la figure 4, qui représente une variante de la transmission de la figure 1, avec une deuxième roue libre R₂ montée en parallèle avec le deuxième embrayage C₂ de manière à empêcher la couronne 14 de tourner plus vite que l'arbre d'entrée E. En quatrième en traction, le planétaire 21 et le porte-satellites 12 ne sont plus entraînés mais deviennent moteurs pour l'arbre d'entrée E, et il suffit de desserrer l'embrayage C₂ pour assurer l'entraînement unidirectionnel par la roue libre R₂ et supprimer le frein moteur. Les passages à la montée quatrième/cinquième et à la descente cinquième/quatrième en traction s'opèrent alors par la seule manoeuvre de serrage et de desserrage du deuxième frein B₂ et s'en trouvent facilités. En se reportant au diagramme des vitesses de la figure 3, on appréciera que le planétaire 21 et le porte-satellites 12 ne dépassent jamais le rapport de réduction G, et donc la couronne 14 ne dépasse jamais la vitesse de l'arbre d'entrée E, ce qui dispense d'adjoindre à la roue libre R₂ un embrayage supplémentaire en série pour la débrayer sur les autres rapports. On maintient ainsi le nombre d'éléments de passage avantageux de cinq éléments de friction seulement et deux roues libres pour cinq vitesses.

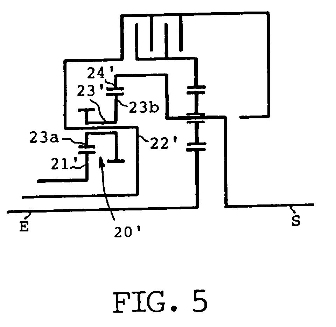

Selon la variante représentée figure 5, l'un des trains planétaires, et par exemple le deuxième train 20 de la figure 1 est remplacé par un train 20' à satellites étagés, comprenant un porte-satellites 22' portant des satellites 23' à deux dentures, une denture 23a engrenant avec un planétaire 21', et une denture 23b engrenant avec une couronne 24'.

Le fonctionnement est le même qu'à la figure 1. Dans le cas de l'exemple 3, et avec les nombres de dents suivants :

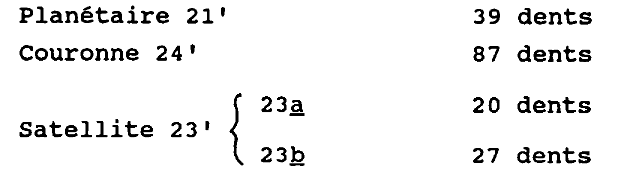

on obtient pratiquement les mêmes rapports, étagements et ouvertures.

On notera que l'on obtiendrait des résultats encore équivalents avec des trains comprenant deux planétaires, un porte-satellites, et deux jeux de satellites engrenant entre eux et chacun avec un des planétaires, qui se substituent, l'un au planétaire d'un train classique et l'autre à la couronne.

Bien entendu, l'invention n'est pas limitée aux formes de réalisation décrites et représentées uniquement à titre d'exemples, mais embrasse toutes variantes. En particulier, on ne sortira ni du cadre ni de l'esprit de l'invention définie par ses revendications en proposant toutes autres modifications concernant les trains planétaires 10, 20, 30, le rapport de réduction G, et/ou l'utilisation éventuelle d'une prise directe par serrage simultané des premier et troisième embrayages C₁ et C₃.

## Revendications

1. Transmission automatique, notamment pour voiture particulière, comportant entre un arbre d'entrée (E) et un arbre de sortie (S) alignés dans un carter, un premier, un deuxième et un troisième trains planétaires (10, 20, 30) comprenant chacun un porte-satellites (12, 22, 32) portant des satellites (13, 23, 33) engrenant avec un planétaire (11, 21, 31) et avec une couronne (14, 24, 34), et cinq organes de friction, à savoir trois embrayages (C₁, C₂, C₃) et deux freins (B₁, B₂) dont le serrage sélectif deux à deux détermine divers rapports de transmission entre l'arbre d'entrée (E) et l'arbre de sortie (S) où :
le planétaire (31) du troisième train (30) est solidaire de l'arbre d'entrée (E), la couronne (24) du deuxième train (20) et le porte-satellites (32) du troisième train (30) sont solidaires de l'arbre de sortie (S),
et où le porte-satellites (22) du deuxième train (20) est relié à la couronne (34) du troisième train (30) et à l'arbre d'entrée (E) respectivement par les premier et troisième embrayages (C₁, C₃) et immobilisé par le premier frein (B₁), transmission caractérisée en ce que :
le planétaire (11) du premier train (10) est solidaire du carter, le porte-satellites (12) du premier train (10) et le planétaire (21) du deuxième train (20) sont solidaires entre eux,
la couronne (14) du premier train (10) est reliée à l'arbre d'entrée (E) par le deuxième embrayage (C₂) et immobilisée par le deuxième frein (B₂),
en sorte d'obtenir par serrage sélectif deux à deux des cinq organes de friction cinq vitesses en marche avant: une première, par le premier embrayage (C₁) et le premier frein (B₁) ; une deuxième, par le premier embrayage (C₁) et le deuxième frein (B₂) ; une troisième, par les premier et deuxième embrayages (C₁, C₂) ; une quatrième, par les deuxième et troisième embrayages (C₂, C₃) ; une cinquième, par le troisième embrayage (C₃) et le deuxième frein (B₂); et une marche arrière, par le deuxième embrayage (C₂) et le premier frein (B₁).

2. Transmission selon la revendication 1, caractérisée en ce qu'elle comporte de plus une première roue libre (R₁) montée directement en parallèle avec le premier frein (B₁) dans un sens tel qu'elle s'oppose à une rotation du porte-satellites (22) du deuxième train (20) en sens inverse de celui de l'arbre d'entrée (E), en sorte que la première vitesse en traction est obtenue par le seul serrage du premier embrayage (C₁).

3. Transmission selon l'une des revendications 1 et 2, caractérisée en ce qu'elle comporte en outre une deuxième roue libre (R₂) montée directement en parallèle avec le deuxième embrayage (C₂) dans un sens tel qu'elle s'oppose à une rotation de la couronne (14) du premier train (10) plus rapide que celle de l'arbre d'entrée (E), en sorte que la quatrième vitesse en traction est obtenue par le seul serrage du troisième embrayage (C₃).

## Patentansprüche

1. Automatisches Getriebe, insbesondere für Personenkraftwagen, bestehend aus zwischen einer Eingangswelle (E) und einer Ausgangswelle (S), die in einem Gehäuse in Linie angeordnet sind, einem ersten, einem zweiten und einem dritten Planetensatz (10, 20, 30), die jeweils einen Planetenträger (12, 22, 32) umfassen, der Planetenräder (13, 23, 33) trägt, die in ein Sonnenrad (11, 21, 31) und in ein Ringrad (14, 24, 34) greifen, und fünf Reibungselementen, nämlich drei Kupplungen (C₁, C₂, C₃) und zwei Bremsen (B₁, B₂) , deren selektives paarweises Eingreifen verschiedene Übersetzungsverhältnisse zwischen der Eingangswelle (E) und der Ausgangswelle (S) bewirkt,
- bei dem das Sonnenrad (31) des dritten Planetensatzes (30) mit der Eingangswelle (E) fest verbunden ist, das Ringrad (24) des zweiten Planetensatzes (20) und der Planatenträger (32) des dritten Planetensatzes (30) mit der Ausgangswelle (S) fest verbunden sind,
- bei dem der Planetenträger (22) des zweiten Planetensatzes (20) jeweils mit dem Ringrad (34) des dritten Planetensatzes (30) und der Eingangswelle (E) über die erste und die dritte Kupplung (C₁, C₃) verbindbar und über die erste Bremse (B₁) festlegbar ist,
dadurch gekenntzeichnet,
dass das Sonnenrad (11) des ersten Planetensatzes (10) mit dem Gehäuse fest verbunden ist,
dass der Planetenträger (12) des ersten Planetensatzes (10) und das Sonnenrad (21) des zweiten Planetensatzes (20) miteinander fest verbunden sind,
dass das Ringrad (14) des ersten Planetensatzes (10) mit der Eingangswelle (E) über die zweite Kupplung (C₂) verbindbar und über die zweite Bremse (B₂) festlegbar ist,
so dass fünf Vorwärtsgänge durch das selektive, jeweils paarweise Eingreifen der fünf Reibungselemente erzielt werden : ein erster mit der ersten Kupplung (C₁) und der ersten Bremse (B₁) ; ein zweiter mit der ersten Kupplung (C₁) und der zweiten Bremse (B₂) ;
ein dritter mit der ersten und der zweiten Kupplung (C₁, C₂) ;
ein vierter mit der zweiten und der dritten Kupplung (C₂, C₃) ;
ein fünfter mit der dritten Kupplung (C₃) und der zweiten Bremse (B₂) ; und ein Rückwärtsgang mit der zweiten Kupplung (C₂) und der ersten Bremse (B₁).

2. Getriebe gemäss Anspruch 1, dadurch gekenntzeichnet, dass es zusätzlich einen ersten unmittelbar parallel zu der ersten Bremse (B₁) dergestalt angeordneten Freilauf (R₁) enthält, dass er verhindert, dass der Planetenträger (22) des zweiten Planetensatzes (20) in umgekehrte Richtung zu der der Eingangswelle (E) rotiert, so dass der erste Gang bei Motorantrieb durch das alleinige Eingreifen der ersten Kupplung (C₁) erzielt wird.

3. Getriebe gemäss einem der Ansprüche 1 und 2, dadurch gekenntzeichnet, dass es zuzätzlich einen zweiten unmittelbar parallel zu der zweiten Kupplung (C₂) dergestalt angeordneten Freilauf (R₂) enthält, dass er verhindert, dass das Ringrad (14) des ersten Planetensatzes (10) schneller rotiert als die Eingangswelle (E), so dass der vierte Gang bei Motorantrieb durch das alleinige Eingreifen der dritten Kupplung (C₃) erzielt wird.

## Claims

1. Automatic transmission, notably for a private car, having, between an input shaft (E) and an output shaft (S) aligned in a casing, first, second and third planetary gear trains (10, 20, 30) each comprising a planet carrier (12, 22, 32)carrying planet gears (13, 23, 33) meshing with a sun gear (11, 21, 31) and with a ring gear (14, 24, 34), and five friction elements, namely three clutches (C₁, C₂, C₃) and two brakes (B₁, B₂) whose selective application, in pairs, determines various transmission ratios between the input shaft (E) and the output shaft (S), where:
the sun gear (31) of the third train (30) is fixed to the input shaft (E), the ring gear (24) of the second train (20) and the planet carrier (32) of the third train (30) are fixed to the output shaft (S),
and where the planet carrier (22) of the second train (20) is connected to the ring gear (34) of the third train (30) and to the input shaft (E) respectively by the first and third clutches (C₁, C₃) and immobilized by the first brake (B₁), transmission characterised in that:
the sun gear (11) of the first train (10) is fixed to the casing, the planet carrier (12) of the first train (10) and the sun gear (21) of the second train (20) are fixed to each other,
the ring gear (14) of the first train (10) is connected to the input shaft (E) by the second clutch (C₂) and immobilized by the second brake (B₂),
so as to obtain, through selective application of the five friction elements in pairs, five forward gears: a first, by means of the first clutch (C₁) and the first brake (B₁); a second, by means of the first clutch (C₁) and the second brake (B₂); a third, by means of the first and second clutches (C₁, C₂); a fourth, by means of the second and third clutches (C₂, C₃); a fifth, by means of the third clutch (C₃) and the second brake (B₂); and a reverse gear, by means of the second clutch (C₂) and the first brake (B₁).

2. Transmission according to Claim 1, characterised in that it also includes a first free wheel (R₁) mounted directly in parallel with the first brake (B₁) in a direction such that it prevents a rotation of the planet carrier (22) of the second train (20) in the direction opposite to that of the input shaft (E), so that the first gear with power on is obtained simply by applying the first clutch (C₁).

3. Transmission according to one of Claims 1 and 2, characterised in that it also includes a second free wheel (R₂) mounted directly in parallel with the second clutch (C₂) in a direction such that it prevents a more rapid rotation of the ring gear (14) of the first train (10) than that of the input shaft (E), so that the fourth gear with power on is obtained simply by applying the third clutch (C₃).
